# EUROPEAN PATENT SPECIFICATION

(11) **EP 1 455 110 B1**
(45) Date of publication and mention of the grant of the patent: **25.05.2005**
(21) Application number: 04013417.3
(22) Date of filing: 31.12.1998
(51) Int. Cl.: F16D 65/847, F16D 65/78, F16D 55/00, F16D 65/14

(54) **A caliper body for a disk brake**
Bremssattel für eine Scheibenbremse
Corps d'un étrier de frein à disque

(43) Date of publication of application: 08.09.2004
(62) Divisional of application: 98830806.0
(73) Proprietor: Freni Brembo S.p.A., 24035 Curno (Bergamo) (IT)
(72) Inventor: Cornolti, Raffaello, 24010 Sorisole (Bergamo) (IT); Previtali, Alberto, 24030 Palazzago (Bergamo) (IT)
(74) Representative: Crippa, Paolo Ernesto

(56) References cited:
- DE-A- 3 833 552
- DE-A- 4 233 276
- US-A- 4 700 813

## Description

The present invention relates to a caliper body for a disk brake according to the preamble of claim 1.

A caliper body for a disk brake of this type is known from DE-A-3833552.

Disk brakes of the type specified are particularly suitable for motor vehicles and, in particular, for racing cars or at least high-powered motor vehicles.

As is known, there is a need to prevent the heat generated in the pads during braking from being transmitted through the pistons to the brake fluid. Otherwise, there would be a risk of the brake fluid boiling.

According to the prior art, attempts have been made to direct as much air as possible towards the radiator elements of the pistons so as to form a barrier to the passage of the heat from the pads to the brake fluid.

The various means currently used for directing the air towards the radiator elements are structurally complex and obstruct the handling of the pads and of the caliper body after use of the car, for example, at the end of a race.

The problem upon which the present invention is based is to devise a disk brake of the type specified which has structural and functional characteristics such as to satisfy the aforesaid need and, at the same time, to overcome the problems mentioned with reference to the prior art.

This problem is solved by a caliper body for a disk brake according to claim 1.

Further characteristics and the advantages of the disk brake according to the present invention will become clear from the following description of a preferred embodiment thereof, given by way of non-limiting example, with reference to the appended drawings, in which:

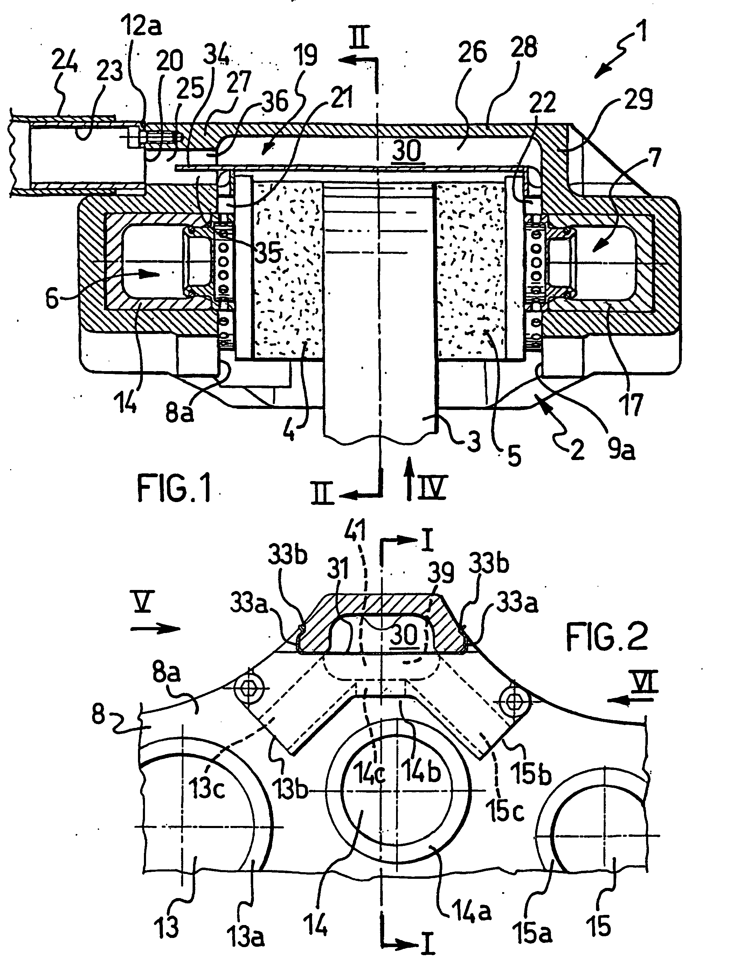

Figure 1 is an elevational view of a disk brake according to the invention, sectioned on the line I-I,

Figure 2 shows a detail of the disk brake of Figure 1, sectioned on the line II-II,

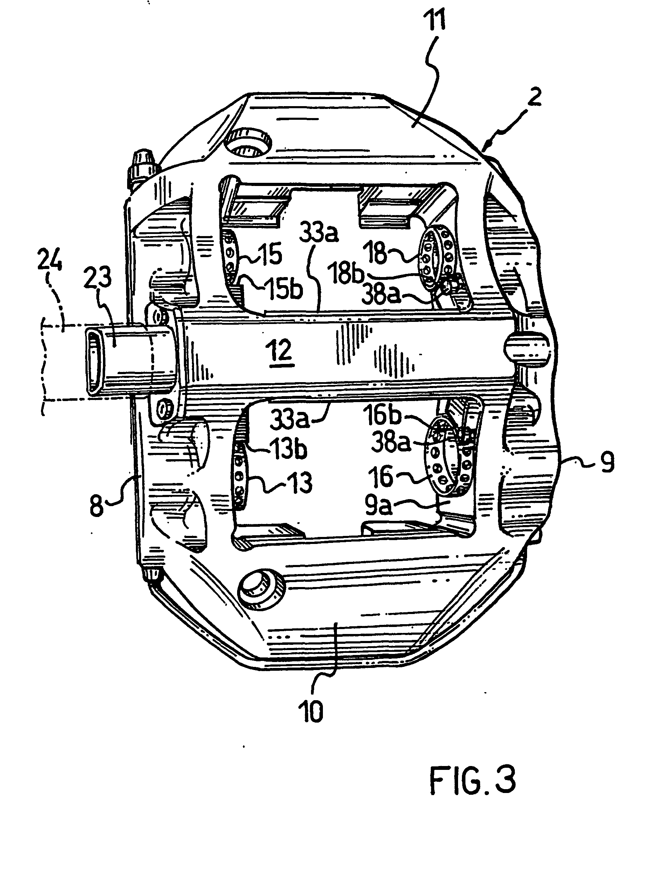

Figure 3 is a perspective view, taken on the arrow III, showing a detail of the disk brake of Figure 1, substantially in plan,

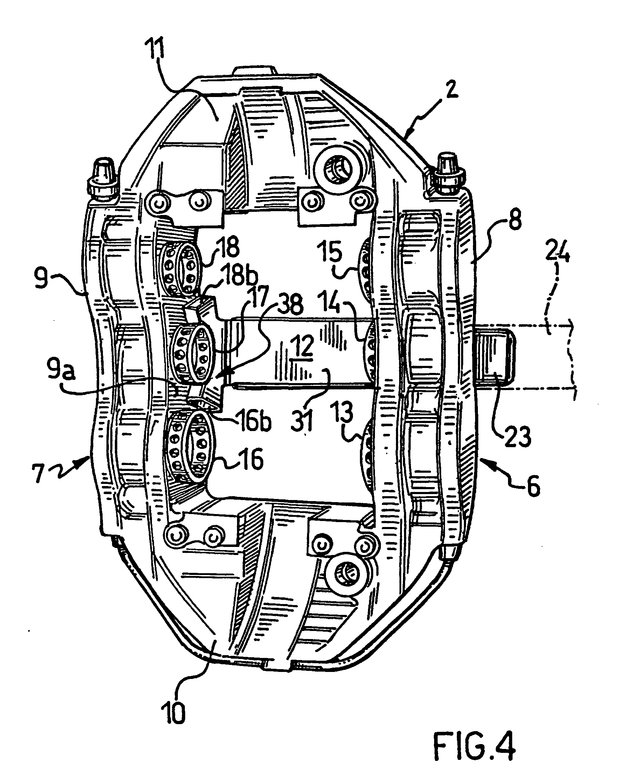

Figure 4 is a perspective view, taken on the arrow IV, showing the detail of Figure 3, substantially from below,

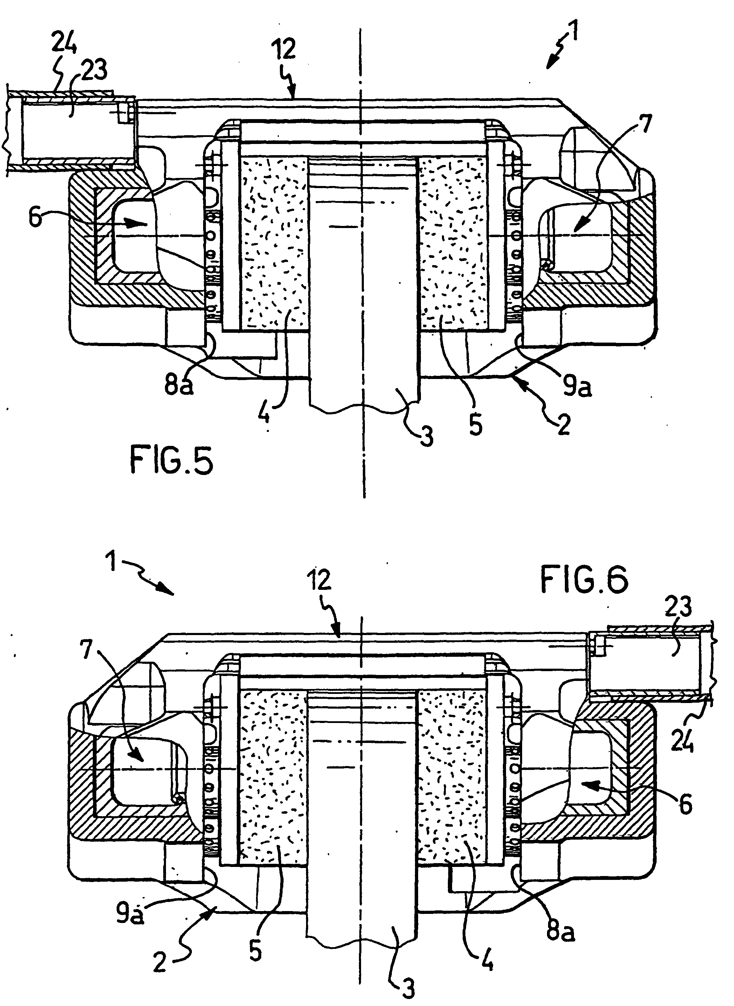

Figure 5 is a partially-sectioned view of the disk brake of Figure 1, taken on the arrow V,

Figure 6 is a partially-sectioned view of the disk brake of Figure 1, taken on the arrow VI,

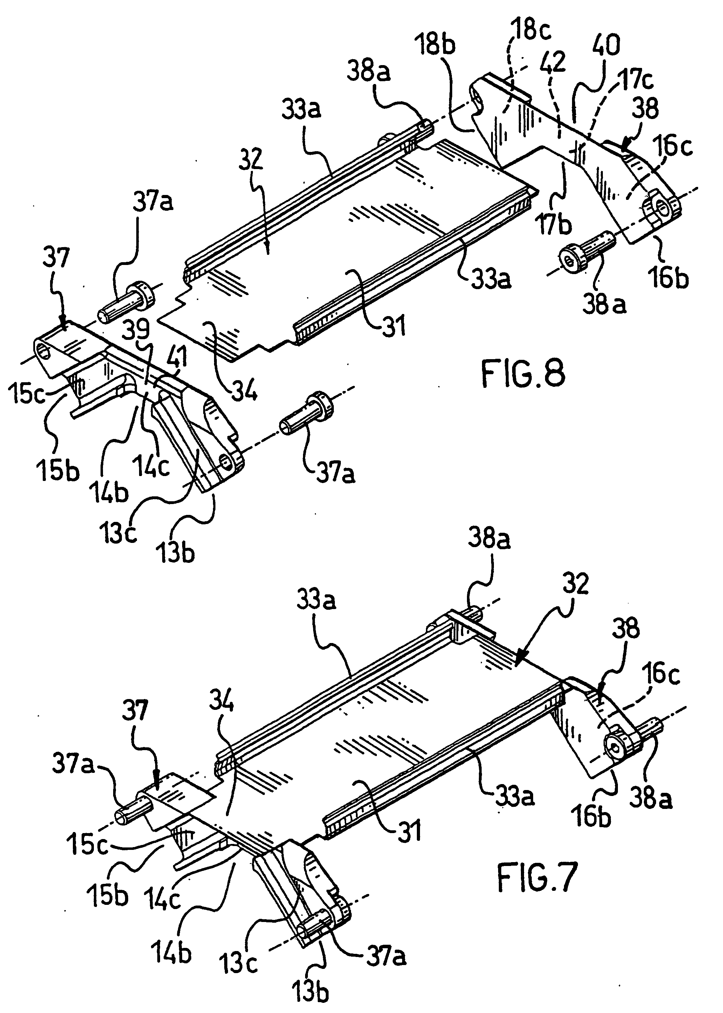

Figure 7 is a perspective view of a detail of the disk brake of Figure 1, and

Figure 8 is a perspective view of the detail of Figure 7, with parts separated.

With reference to the appended drawings, a disk brake for a motor-vehicle in general, and for a racing car or, in any case, high-powered car in particular, is generally indicated 1.

The disk brake 1 comprises a caliper body 2 and a disc 3 both for fixing to a hub of the motor vehicle for the attachment of a vehicle wheel.

Two pads 4 and 5 mounted on the caliper body 2 are acted on by respective pressure means 6 and 7, supported by the caliper body 2 and, more precisely, supported by the elongate hub-side element 8 and by the elongate wheel-side element 9, respectively.

The caliper body 2 is formed as a single piece of aluminium alloy with good mechanical characteristics, by machining, from a semi-finished blank, for example a rolled section, or from a moulded piece. The caliper body comprises a hub-side elongate element 8 and a wheel-side elongate element 9. The elongate elements 8 and 9 have respective flat inner surfaces 8a and 9a facing towards the disk 3 and extend substantially tangentially relative to the disk 3. They support and house the respective pressure means 6 and 7.

The caliper body 2 is completed by three connecting bridges 10, 11 and 12 formed integrally with the elongate elements 8 and 9 and extending like bridges over the disk 3. The purpose of the bridges 10, 11 and 12 is to interconnect the elongate elements 8 and 9 rigidly.

More precisely, the three connecting bridges comprise two end connecting bridges 10 and 11 which connect the front and rear ends of the elongate elements 8 and 9 and a central connecting bridge 12 which connects the elongate elements at two intermediate points thereof.

In the embodiment shown, the pressure means 6 housed in the hub-side elongate element 8 comprise three hydraulic pistons 13, 14 and 15 spread out along the length of the elongate element 8 and having diameters which decrease from the first, front piston 13 to the last, rear piston 15.

Similarly, the pressure means 7 housed in the wheel-side elongate element 9 comprise three hydraulic pistons 16, 17 and 18 spread out along the length of the elongate element 9 and having diameters which also decrease from the first, front piston 16 to the last, rear piston 18.

It should be noted that each piston has an active end which is in contact with the pad. These active ends are formed generally so as to dissipate heat, that is, to reduce the amount of heat which passes from the pads to the brake fluid.

In the embodiment shown, these active ends, which are called radiator elements, have openings in the form of circular holes, which are indicated in the drawings by reference numerals 13a to 18a each of which relates to a respective one of the pistons 13 to 18.

The disk brake 1 according to the present invention comprises a duct 19 provided for the passage of cooling air for cooling the radiator elements 13a-18a, the duct 19 being formed inside the caliper body 2.

The duct 19 advantageously extends through the central bridge 12 from an end 12a of the duct disposed adjacent the hub-side elongate element 8 and extends between an inlet opening 20 and two outlet openings 21 and 22 disposed at the height of and facing the radiator elements 13a, 14a and 15a and the radiator elements 16a, 17a and 18a, respectively.

The inlet opening 20 preferably has a connector 23 for the connection of the duct 19 to a cooling-air feed pipe 24, for example, for air coming from a suitable air-intake of the motor-vehicle.

The duct 19 has a first portion 25 in the form of a hole extending in an end portion 27 of the central bridge 12 disposed adjacent the hub-side elongate element 8, as well as a second portion 26 extending along and inside a central portion 28 of the central bridge as far as an end portion 29. The second portion 26 is constituted by a channel 30 formed in the central bridge 12 facing the disk 3 and covered by a wall 31 of a sheet-steel cover 32 snap-engaged on the central portion 28 of the bridge. For this purpose, the cover 32 comprises flanges 33a which are bent at right angles and snap-engage grooves 33b formed in the bridge.

It should be noted that the wall 31 is extended inside the first portion 25 by an appendage 34 which extends for about half of the length of the first portion. This appendage 34 divides this half of the first portion into two branches 35 and 36, of which one 35 is directed towards the opening 21 and the other 36 is directed towards the opening 22.

The outlet openings 21 and 22 preferably comprise respective diffuser bodies 37 and 38 which are substantially fan-shaped and are fixed to the elongate elements 8 and 9 by means of respective pairs of screws 37a and 38a. These diffuser bodies 37 and 38, which are made of aluminium alloy, have respective inlet openings 39 and 40 for the supply of the cooling air. The diffuser bodies 37 and 38 have, respectively, three outlet openings 13b, 14b and 15b, spread out like a fan and three outlet openings 16b, 17b and 18b also spread out like a fan, all directly facing and close to the respective radiator elements.

In particular, respective ducts 41 and 42 formed in the diffuser bodies 37 and 38 extend, respectively, from the inlet openings 39 and 40 and branch, respectively, into three ducts 13c, 14c and 15c opening from the outlet openings 13b, 14b and 15b directly onto the radiator elements 13, 14 and 15, and into three ducts 16c, 17c and 18c opening from the outlet openings 16b, 17b and 18b directly onto the radiators 16, 17 and 18.

It should be noted that each diffuser body 37, 38 is in the form of a half-shell in which the ducts are formed as channels. When each diffuser body 37, 38 is fixed by the screws 37a, 38a to the respective elongate element 8, 9 in a position against the internal surfaces 8a, 9a, the half-shell, and hence also its channels, are covered by the elongate body.

In operation, the cooling air coming from an air-intake of the motor vehicle passes through the pipe 24, reaches and passes through the duct 19 until it reaches the diffuser bodies 37, 38 and the outlet openings. The cooling air emerges from these and passes directly over the radiator elements.

By virtue of the fact that the outlet openings reach into the immediate vicinity of the radiator elements which they face in close proximity, the cooling is highly effective.

If the pads have to be replaced because they are worn, the caliper body can be removed from the wheel hub directly, simply by detaching the pipe from the connector.

Finally, the disk brake according to the present invention has the advantage of unusually effective cooling of the radiator elements and the brake oil is in practice not susceptible to boiling.

A further advantage of the disk brake according to the present invention lies in the simplicity of the operations to be performed in order to replace the pads.

A further advantage of the disk brake according to the present invention is that it is also structurally simple since the cooling-air duct is formed in an industrially advantageous manner by machining during the manufacture of the caliper body.

It should also be noted that the disk brake according to the present invention is also structurally strong and functionally reliable.

Naturally, in order to satisfy contingent and specific requirements, an expert in the art may apply to the disk brake of the present invention many modifications and variations all of which, however, are included within the scope of protection of the invention as defined by the following claims.

## Claims

1. A caliper body (2) for a disk brake, said caliper body (2) comprising a hub-side elongate element (8), a wheel-side elongate element (9), said elongate elements (8, 9) comprising an internal side suitable to face a disc (3) and an opposite external side, said caliper body (2) further comprising connecting bridges (10, 11, 12), said connecting bridges comprising end bridges (10, 11) extending astride a disk (3), and pressure means (6, 7), housed in the elongate elements (8, 9), acting on respective pads (4, 5) by means of active ends formed so as to dissipate heat, the caliper body (2) comprising a duct (19) for the passage of cooling air, formed inside the caliper body (2), **characterised in that** the duct (19) is extended between an inlet opening (20), adjacent the external side of an elongate element (8), and at least one outlet opening (21, 22) disposed near the active end of the pressure means (6, 7).

2. A caliper body (2) according to Claim 1, wherein the duct (19) extends inside at least one of the bridges (10, 11, 12) from an end (12a) disposed adjacent the hub-side elongate element (8).

3. A caliper body (2) according to Claim 2, wherein there are a central bridge (12) and two end bridges (10, 11), and the duct (19) is formed inside the central bridge (12).

4. A caliper body (2) according to Claim 3, wherein the duct (19) formed inside the central bridge (12) comprises an outlet opening (21) disposed at the height of the active ends of the pressure means (6) of the hub-side elongate element (8) and an outlet opening (22) disposed at the height of the active ends of the pressure means (7) of the wheel-side elongate element (9).

5. A caliper body (2) according to Claim 4, wherein the pressure means (6, 7) comprise three pistons (13-18) for each elongate element (8, 9), each piston (13-18) having a respective active end, and in that each outlet opening (21, 22) comprises a diffuser body (37, 38) having three outlets (13b-15b, 16b-18b) in a fan-like arrangement.

6. A caliper body (2) according to Claim 5, wherein each diffuser body (37, 38) is in the form of a half-shell in a position against the respective elongate element (8, 9).

7. A caliper body (2) according to Claim 5, wherein the duct (19) formed inside the central bridge (12) is constituted by a channel (30) formed in the central bridge (12) and facing towards the disk (3), and by a wall (31) of a cover (32) snap-engaged on the bridge to cover the channel.

8. A caliper body (2) according to Claim 7, wherein the wall (31) comprises an appendage (34) extending into a first portion (25) of the duct.

9. A disk brake (1) comprising a caliper body (2) according to anyone of the preceding claims.

## Patentansprüche

1. Bremssattelkörper (2) für eine Scheibenbremse, wobei der Bremssattelkörper (2) ein nabenseitiges längliches Element (8) und ein radseitiges längliches Element (9) umfasst, wobei die länglichen Elemente (8, 9) eine Innenseite, die geeignet ist, zu einer Scheibe (3) zu weisen, und eine gegenüberliegende Außenseite umfassen, wobei der Bremssattelkörper (2) des Weiteren Verbindungsbrücken (10, 11, 12), welche sich rittlings über eine Scheibe (3) erstreckende Endbrücken (10, 11) umfassen, und in den länglichen Elementen (8, 9) untergebrachte Druckmittel (6, 7) umfasst, wobei diese Druckmittel mittels aktiver Enden auf jeweilige Bremsklötze (4, 5) wirken, wobei diese aktiven Enden so geformt sind, dass sie Wärme dissipieren, wobei der Bremssattelkörper (2) einen Durchlass (19), der im Inneren des Bremssattelkörpers (2) ausgebildet ist, zum Hindurchführen von Kühlluft umfasst, **dadurch gekennzeichnet, dass** sich der Durchlass (19) zwischen einer Einlassöffnung (20) neben der Außenseite eines länglichen Elements (8) und wenigstens einer Auslassöffnung (21, 22), die nahe dem aktiven Ende des Druckmittels (6, 7) angeordnet ist, erstreckt.

2. Bremssattelkörper (2) gemäß Anspruch 1, wobei der Durchlass (19) sich im Inneren wenigstens einer der Brücken (10, 11, 12) von einem Ende (12a), das neben dem nabenseitigen länglichen Element (8) angeordnet ist, erstreckt.

3. Bremssattelkörper (2) gemäß Anspruch 2, wobei eine zentrale Brücke (12) und zwei Endbrücken (10, 11) vorhanden sind und der Durchlass (19) im Inneren der zentralen Brücke (12) ausgebildet ist.

4. Bremssattelkörper (2) gemäß Anspruch 3, wobei der im Inneren der zentralen Brücke (12) ausgebildete Durchlass (19) eine Auslassöffnung (21), die in Höhe der aktiven Enden des Druckmittels (6) des nabenseitigen länglichen Elements (8) angeordnet ist, und eine Auslassöffnung (22), die in Höhe der aktiven Enden des Druckmittels (7) des radseitigen länglichen Elements (9) angeordnet ist, umfasst.

5. Bremssattelkörper (2) gemäß Anspruch 4, wobei die Druckmittel (6, 7) drei Kolben (13-18) für jedes längliche Element (8, 9) umfassen, wobei jeder Kolben (13-18) jeweils ein aktives Ende aufweist, und wobei jede Auslassöffnung (21, 22) einen Diffusorkörper (37, 38) mit drei Auslässen (13b-15b, 16b-18b) in einer gebläseartigen Anordnung umfasst.

6. Bremssattelkörper (2) gemäß Anspruch 5, wobei jeder Diffusorkörper (37, 38) die Form einer Halbschale in einer Position gegen das jeweilige längliche Element (8, 9) aufweist.

7. Bremssattelkörper (2) gemäß Anspruch 5, wobei der im Inneren der zentralen Brücke (12) ausgebildete Durchlass (19) durch einen Kanal (30), der in der zentralen Brücke (12) ausgebildet ist und zur Scheibe (3) weist, und durch eine Wand (31) einer Abdeckung (32), die auf der Brücke eingerastet ist, um den Kanal abzudecken, gebildet ist.

8. Bremssattelkörper (2) gemäß Anspruch 7, wobei die Wand (31) einen Fortsatz (34) umfasst, der sich in einen ersten Abschnitt (25) des Durchlasses hinein erstreckt.

9. Scheibenbremse (1), die einen Bremssattelkörper (2) gemäß einem der vorangehenden Ansprüche umfasst.

## Revendications

1. Corps d'étrier (2) pour un frein à disque, ledit corps d'étrier (2) comprenant un élément allongé côté moyeu (8), un élément allongé côté roue (9), lesdits éléments allongés (8, 9) comprenant un côté interne adapté pour être face à un disque (3) et un côté externe opposé, ledit corps d'étrier (2) comprenant en outre des traverses de liaison (10, 11, 12), lesdites traverses de liaison comprenant des traverses terminales (10, 11) s'étendant à cheval sur un disque (3), et des moyens de pression (6, 7) logés dans les éléments allongés (8, 9), agissant sur des plaquettes respectives (4, 5) au moyen d'extrémités actives formées de manière à dissiper la chaleur, le corps d'étrier (2) comprenant un conduit (19) pour le passage de l'air de refroidissement, formé à l'intérieur du corps d'étrier (2), **caractérisé en ce que** le conduit (19) est étendu entre une ouverture d'admission (20), adjacente au coté externe d'un élément allongé (8), et au moins une ouverture de sortie (21, 22) disposée à proximité de l'extrémité active des moyens de pression (6, 7).

2. Corps d'étrier (2) selon la revendication 1, dans lequel le conduit (19) s'étend à l'intérieur d'au moins une des traverses (10, 11, 12) depuis une extrémité (12a) disposée de manière adjacente à l'élément allongé côté moyeu (8).

3. Corps d'étrier (2) selon la revendication 2, dans lequel il y a une traverse centrale (12) et deux traverses terminales (10, 11), et dans lequel le conduit (19) est formé à l'intérieur de la traverse centrale (12).

4. Corps d'étrier (2) selon la revendication 3, dans lequel le conduit (19) formé à l'intérieur de la traverse centrale (12) comprend une ouverture de sortie (21) disposée à hauteur des extrémités actives des moyens de pression (6) de l'élément allongé côté moyeu (8) et une ouverture de sortie (22) disposée à hauteur des extrémités actives des moyens de pression (7) de l'élément allongé côté roue (9).

5. Corps d'étrier (2) selon la revendication 4, dans lequel les moyens de pression (6, 7) comprennent trois pistons (13-18) pour chaque élément allongé (8, 9), chaque piston (13-18) ayant une extrémité active respective, et en ce que chaque ouverture de sortie (21, 22) comprend un corps de diffuseur (37, 38) ayant trois sorties (13b-15b, 16b-18b) selon un agencement similaire à un ventilateur.

6. Corps d'étrier (2) selon la revendication 5, dans lequel chaque corps de diffuseur (37, 38) a la forme d'une demi-coquille dans une position contre l'élément allongé respectif (8, 9).

7. Corps d'étrier (2) selon la revendication 5, dans lequel le conduit (19) formé à l'intérieur de la traverse centrale (12) est constitué d'un canal (30) formé dans la traverse centrale (12) et faisant face au disque (3), et d'une paroi (31) d'un couvercle (32) engagé par encliquetage sur la traverse pour recouvrir le canal.

8. Corps d'étrier (2) selon la revendication 7, dans lequel la paroi (31) comprend un appendice (34) pénétrant dans une première portion (25) du conduit.

9. Frein à disque (1) comprenant un corps d'étrier (2) selon l'une quelconque des revendications précédentes.
